# DEMANDE DE BREVET EUROPEEN

(11) **EP 3 686 422 A1**
(43) Date de publication de la demande: **29.07.2020**
(21) Numéro de dépôt: 19153138.3
(22) Date de dépôt: 22.01.2019
(51) Int. Cl.: F03B 3/14, F03B 11/00, F03B 11/02, F03B 17/06

(54) **TURBINE A ROTATION HYDROSTATIQUE**

(71) Demandeur: Quiquerez, Alain, 1251 GY (CH)
(72) Inventeur: Quiquerez, Alain, 1251 GY (CH)
(74) Mandataire: Bugnion Genève

(57) **Abrégé**

L'invention concerne une turbine (1) pour liquide comprenant un stator (16) et un rotor (17) monté en rotation autour d'un axe de rotation I dans le stator ; ledit stator comprenant :
- au moins une portion circonférentielle de poussée (18) dans laquelle s'étend une chambre (20) dans le stator selon un plan circonférentiel P ;
- au moins une admission (5, 7) communiquant avec la chambre pour l'entrée du liquide dans la chambre ;
- au moins un refoulement (14, 15) communicant avec la chambre pour la sortie du liquide hors de la chambre ;
- une pluralité de pales (27) configurées pour se déplacer dans ladite chambre en révolution selon une trajectoire circonférentielle autour d'un axe de rotation;
le stator comprenant au moins une portion circonférentielle d'insertion (31 ; 104, 105) des pales dans laquelle s'étend une fente (33, 111) orientée dans le plan circonférentiel P ; lesdites pales (27) étant montées sur le rotor de manière pivotante, selon leur direction radiale R relative à l'axe de rotation I, pour pouvoir pivoter dans ladite chambre (20 ; 92, 94) entre une position de poussée, et une position d'insertion pour permettre le passage de la section maximale en épaisseur (47) des pales dans ladite fente (33, 111) de la portion circonférentielle d'insertion (31 ; 104, 105) à chaque révolution des pales autour de l'axe I.

## Description

### DOMAINE TECHNIQUE DE L'INVENTION

La présente invention concerne une turbine rotative pour liquide, en particulier une turbine à rotation hydrostatique. L'invention concerne aussi un groupe de production électrique par collecte d'énergie hydraulique et transformation en énergie électrique comprenant une telle turbine.

### ETAT DE LA TECHNIQUE ANTERIEURE

Le principe de turbine rotative du type Pelton est basé sur l'exploitation de la vitesse de l'eau au travers d'injecteur impactant des augets associés à une roue. Ainsi, l'énergie cinétique de l'eau s'écoulant dans une conduite forcée est transformée en énergie mécanique. L'eau s'écoule ensuite librement à la pression atmosphérique dès l'instant où elle quitte l'injecteur sous forme de jet. Ces turbines sont adaptées à des hautes chutes d'eau et des faibles débit d'eau. Les rendements d'une telle turbine sont faibles dans de nombreuses conditions de pression et de débit. Ces turbines sont soumises à l'usure du fait de la forte énergie cinétique déployée. Une telle turbine n'est pas non plus réversible.

La demande de brevet WO2015007547A1 concerne une valve de régulation de fluide pour un réseau de transport et de distribution de fluide et qui peut être utilisée pour une production efficace d'électricité. La valve comprend une turbine possédant des pales montées sur le stator et pivotant individuellement dans une direction axiale pour sceller une première chambre d'une seconde chambre ; chaque chambre comprenant une entrée et une sortie de fluide.

Il n'existe toutefois pas de solution de turbine rotative permettant d'optimiser la poussée hydraulique en minimisant les pertes pour assurer la rotation du rotor de la turbine de manière plus efficace.

### EXPOSE DE L'INVENTION

L'invention vise à remédier à cet inconvénient. L'invention vise aussi à apporter d'autres avantages comme par exemple celui de permettre une production de puissance accrue dans de multiples conditions de débit et de pression hydraulique (chute, rivière bassin, etc.) ou encore d'économiser d'importantes réserve d'eau.

Selon un aspect, l'invention concerne une turbine pour liquide comprenant un stator et un rotor monté en rotation autour d'un axe de rotation I dans le stator ; ledit stator comprenant :
- au moins une portion circonférentielle de poussée dans laquelle s'étend une chambre de compression dans le stator selon un plan circonférentiel ;
- au moins une admission communiquant avec la chambre pour l'entrée du liquide dans la chambre de compression ;
- au moins un refoulement communicant avec la chambre pour la sortie du liquide hors de la chambre ;
- des moyens de guidage du rotor en rotation selon un axe de rotation;
- une pluralité de pales configurées pour se déplacer dans ladite chambre en révolution selon une trajectoire circonférentielle autour de l'axe de rotation;
chaque pale ayant au moins une surface active de poussée et au moins une section maximale en épaisseur perpendiculaire à ladite surface active de poussée de plus petite surface que la surface active de poussée ;
caractérisée en ce que le stator comprend au moins une portion circonférentielle d'insertion s'étendant dans la trajectoire circonférentielle des pales dans laquelle s'étend une fente orientée dans le plan circonférentiel ; de plus petite section que la section de ladite chambre et traversant ladite portion circonférentielle d'insertion ;
et en ce que lesdites pales sont montées sur le rotor de manière pivotante, selon leur direction radiale relative à l'axe de rotation, pour pouvoir pivoter dans ladite chambre entre une position de poussée, dans laquelle la pale est transversale au plan circonférentiel entre l'admission et l'échappement, et une position d'insertion, alignée ou parallèle par rapport au plan circonférentiel, pour permettre le passage de la section maximale en épaisseur des pales dans ladite fente de la portion circonférentielle d'insertion à chaque révolution des pales autour de l'axe de rotation ;
et en ce que la turbine comprend des moyens d'actionnement pour commander le mouvement de pivotement des pales entre la position de poussée et la position d'insertion en fonction de la position circonférentielle de chaque pale relativement aux portions circonférentielles de poussée et d'insertion.

Ainsi, la turbine selon l'invention est configurée de telle manière que, dans la phase de poussée, la position de la pale dans la chambre de poussée entre l'admission et le refoulement est telle que la poussée hydraulique sur la pale est maximale et dans la phase d'insertion la position de la pale est telle à l'entrée de la fente que la pression hydraulique exercée sur la pale est au contraire minimisée. Ainsi une montée efficace en pression dans la chambre peut être obtenue.

En particulier, les moyens d'actionnement sont configurés pour commander le pivotement des pales de la position de poussée dans la chambre à la position d'insertion juste avant l'entrée dans la portion circonférentielle d'insertion du stator en particulier au niveau du refoulement et/ou pour commander le pivotement des pales de la position d'insertion à la position de poussée à l'entrée dans la chambre en particulier au niveau de l'admission.

Dans une configuration préférée, les moyens d'actionnement comprennent des moyens de blocage de la pale en position transversale de poussée.

De préférence, la surface active de poussée de chaque pale est dimensionnée de façon à sensiblement sceller la section transversale de la chambre de compression lors du déplacement de chaque pale en position de poussée dans la chambre.

De préférence, les pales possèdent un bord libre qui s'agence parfaitement avec la surface interne de la chambre. La pale peut avoir une forme générale avec une extrémité de bord arrondie ou en forme d'arc de cercle laquelle est complémentaire d'une surface arrondie ou arquée interne de la chambre.

Ainsi dans la phase de poussée dans la chambre, les fuites entre la surface interne de la chambre et la pale sont réduites au maximum.

Selon un aspect possible les pales sont montées sur un cylindre central rotatif et/ou arbre de rotation de sorte qu'au moins deux pales consécutives sont simultanément en position de poussée dans la chambre.

Ainsi, on obtient une meilleure étanchéité entre l'admission et le refoulement dans la chambre. On obtient aussi une répartition de la force de poussée sur les pales par le volume intermédiaire créé et donc une meilleure résultante de pression.

De préférence, la section de la fente de ladite au moins une portion d'insertion est ajustée à la section maximale en épaisseur de chaque pale pour permettre le déplacement en glissement de la pale de manière essentiellement étanche au liquide.

Ainsi, les pertes de pression résultant d'une possible fuite de liquide au travers de la fente d'insertion sont minimisées. Des solutions additionnelles peuvent être employées pour réduire les fuites en cas de pression de fonctionnement élevée comme la pose de segments ou l'insertion de membranes souples en appui contre la pale par la pression d'admission, etc.

Selon une caractéristique avantageuse, l'admission ou les admissions et le refoulement ou les refoulements sont disposés à proximité respectivement des proximités amont et aval de la chambre.

Ainsi, le liquide entrant dans la chambre par l'admission se fait dans le sens de déplacement des pales quel que soit le sens (réversibilité possible). L'avantage est aussi d'assurer une longueur de chambre maximale entre l'admission et le refoulement pour permettre une séparation transversale de la chambre par une ou plusieurs pales lors de leur trajet dans la chambre entre l'admission et l'échappement. La section d'ouverture totale de ou des admissions et de ou des échappements peut être variable. Toutefois, pour un travail à basse pression de la turbine, il est avantageux de prévoir une section d'ouverture totale qui soit suffisamment large et de préférence de taille égale à la section active de poussée de la pale.

Le nombre d'admissions *n* et le nombre de refoulements r dans la chambre peuvent être variables, par exemple *n* et *r* compris entre 1 et 10, de préférence entre 2 et 4.

Selon une caractéristique préférentielle de l'invention, le rotor comprend au moins un cylindre central de support comprenant un alésage central pour le montage de l'arbre de rotation du rotor et une pluralité de paliers radiaux ; chacun d'eux étant configuré pour la connexion en pivot de la base d'une pale.

Ainsi, le dispositif conception simple, d'encombrement minimum et mécaniquement robuste, permettant le pivotement individuel de chaque pale.

Le nombre de pales peut être entre 4 et 20, de préférence entre 6 et 12.

D'autres configurations sont possible. Par exemple, plutôt qu'individuellement pivotantes, les pales pourraient être assemblées par paires pivotantes de pales opposées radialement et de surface active de poussée perpendiculairement orientées l'une par rapport à l'autre. Dans ce cas, le nombre total de pales est nécessairement limité (à 6 ou 8) afin de permettre le croisement des paires au centre et leur actionnement en pivotement possible par les moyens d'actionnement.

Selon une autre caractéristique avantageuse de l'invention, le cylindre central se prolonge entre les pales pivotantes par des ailes radiales fixes; les ailes ayant une section d'épaisseur maximale sensiblement ajustée en glissement étanche à la section de la fente de la portion circonférentielle d'insertion ou des portions circonférentielle d'insertion.

Ainsi la forme des ailes radiales fixe du cylindre est conçue de manière à établir l'étanchéité au niveau de la fente d'insertion dont les écarts dus aux faibles dimensions ne permettent pas de jointure correcte.

Selon une autre caractéristique avantageuse, les moyens d'actionnement comprennent des moyens d'actionnement à came configurés complémentairement sur le stator et sur chaque pale ou associée à chacune d'elles, tels que respectivement au moins un chemin de came et un suiveur de came; de manière à faire pivoter, au moins une fois à chaque révolution, chaque pale individuellement de leur position de poussée dans la chambre à leur position d'insertion dans la fente, puis en retour, de leur position d'insertion dans la fente à leur position de poussée dans la chambre.

Une telle configuration des moyens d'actionnement est simple et permet d'actionner précisément et automatiquement les pales en position de manière cyclique. Les positions relatives des moyens d'actionnement peuvent être facilement réglées en fonction du nombre de chambres et de portions d'insertion, de leurs longueurs angulaires et de leurs positions relatives.

Pour un encombrement minimum des moyens d'actionnement dans la partie centrale du stator, le stator comprend au moins une couronne annulaire comprenant une partie des moyens d'actionnement à came, de préférence plusieurs de came configurés pour engager un suiveur de came localisé sur ou à proximité de la base de chaque pale.

Dans un mode particulier possible, le stator comprend une couronne annulaire inférieure et une couronne annulaire supérieure lesquelles sont respectivement associées à un flasque inférieur et un flasque supérieur du stator ; chaque couronne annulaire comprenant au moins un chemin de came configuré pour engager un suiveur de came de la pale et faire pivoter la pale dans une des deux positions d'insertion ou de poussée, par exemple d'un quart de tour par position; les positions étant différentes pour chaque couronne.

L'avantage d'une telle solution en « sandwich » contre la base de la pale est qu'elle permet un actionnement selon une construction compacte des moyens d'actionnement. L'ajustement de l'écartement des couronnes pour contrôler les jeux avec les pales peut se faire plus aisément. Le dispositif est démontable facilement et le remplacement de tout ou partie des moyens d'actionnement en cas d'usure est possible.

Selon une caractéristique avantageuse, le stator comprend un flasque supérieur et un flasque inférieur délimitant en partie ou au moins ladite chambre ; et chaque flasque étant traversé par au moins une admission et un refoulement communiquant dans la chambre ; les admissions étant de préférence positionnés en vis-à-vis dans la direction parallèle à l'axe de rotation ou de chaque côté du plan circonférentiel et/ou les refoulements étant de préférence positionnés en vis-à-vis dans la direction parallèle à l'axe de rotation ou de chaque côté du plan circonférentiel.

Un telle dispositions des admissions et refoulement a pour avantage d'améliorer le flottage, c'est-à-dire l'équilibrage des pressions de turbulences.

Afin de faciliter le démontage de la turbine pour sa maintenance ou le remplacement de pièces d'usure, le stator comprend une échancrure radiale pour l'insertion amovible d'un sabot formant au moins une portion circonférentielle d'insertion comprenant la fente.

Ainsi, le sabot peut comprendre une partie inférieure de sabot et une partie supérieure de sabot démontable et délimitant la fente.

Selon un autre mode possible de l'invention la turbine comprend une première portion circonférentielle de poussée dans laquelle s'étend une première chambre comprenant au moins une admission et au moins un refoulement et une première portion d'insertion comprenant une première fente et comprend en plus une deuxième portion circonférentielle de poussée dans laquelle s'étend une seconde chambre comprenant au moins une autre admission et au moins un autre refoulement et une seconde portion d'insertion ; les premières et secondes portions de poussée et les premières et secondes portions d'insertion étant opposées vis-à-vis de l'axe de rotation I.

De préférence, les premières et secondes portions de poussée et les premières et secondes portions d'insertion sont conçus symétriquement relativement au centre de rotation (arrangement « miroir »).

Une telle configuration à double chambre permet une utilisation à plus haute pression de la turbine du fait que l'équilibrage des forces hydrauliques est mieux contrôlé. En effet, le flottage du rotor est mieux assuré du fait du travail opposé des pales dans les chambres opposées et de préférence symétriques.

Selon un tel mode de réalisation, le stator comprend une partie de premiers moyens d'actionnement à came associés à la première portion de poussée pour faire pivoter chaque pale individuellement de leur position de poussée dans la chambre à leur position d'insertion et inversement et une partie de seconds moyens d'actionnement à came associés à la seconde portion de poussée pour faire pivoter chaque pale individuellement de leur position de poussée dans la chambre à leur position d'insertion et inversement ; les parties de premiers et second moyens d'actionnement à came étant opposées, de préférence symétriquement, vis-à-vis de l'axe de rotation I.

En particulier, les premiers et second moyens d'actionnement à came sont portés sur au moins une couronne annulaire comprenant deux chemins de came opposés, de préférence symétriquement, configurés pour engager un suiveur de came de chaque pale pour le pivotement de la pale dans la direction d'insertion ou de poussée.

Selon un mode possible, l'invention concerne aussi un groupe de production électrique par collecte d'énergie hydraulique comprenant au moins une turbine selon l'une quelconque des revendications précédentes couplée à un générateur électrique et optionnellement un groupe multiplicateur entre la turbine et le générateur pour multiplier la vitesse de rotation transmise par l'arbre de la turbine au générateur électrique.

La turbine selon l'invention peut aussi être utilisée en tant que pompe hydraulique au moyen d'un moteur électrique entrainant le rotor.

La turbine peut aussi être adaptée comme compresseur de fluides compressibles (gaz) ou comme pompe à vide. Selon une autre utilisation possible, la turbine peut être adaptée comme moteur à combustion en utilisant une ou plusieurs admissions pour l'alimentation d'un combustible (comme de l'essence ou du kérosène) et un ou plusieurs admissions pour l'alimentation en gaz (comme de l'oxygène). La turbine peut être équipée au minimum de deux chambres distinctes, l'une faisant office d'aspiration d'un mélange air/combustible en zone aval de la pale présente tandis qu'une compression s'opère en amont de celle-ci pour le transfert dudit mélange dans l'autre chambre, dans laquelle, s'opère la combustion et poussée en aval de la pale présente ainsi que l'échappement des gaz brulés, en amont de celle-ci.

### BREVE DESCRIPTION DES FIGURES

D'autres caractéristiques et avantages de l'invention ressortiront à la lecture de la description qui suit, en référence aux figures annexées, qui illustrent :
- La figure 1 est une vue générale en perspective d'une turbine selon un premier mode de l'invention pour une application de collecte d'énergie hydraulique ;
- La figure 2 est une autre vue générale en perspective de la turbine de la figure 1 ;
- La figure 3 est une vue en coupe transversale d'une turbine selon le premier mode ;
- La figure 4 est une vue éclatée en coupe de la turbine de la figure 3 ;
- La figure 5 est une vue en perspective partielle de la turbine des figures 1 à 4 sans le sabot et le flasque supérieur ;
- La figure 6 est une vue en perspective partielle de la turbine de la figure 5 sans le rotor ;
- La figure 7 est une vue du sabot avec insertion d'une pale dans la fente ;

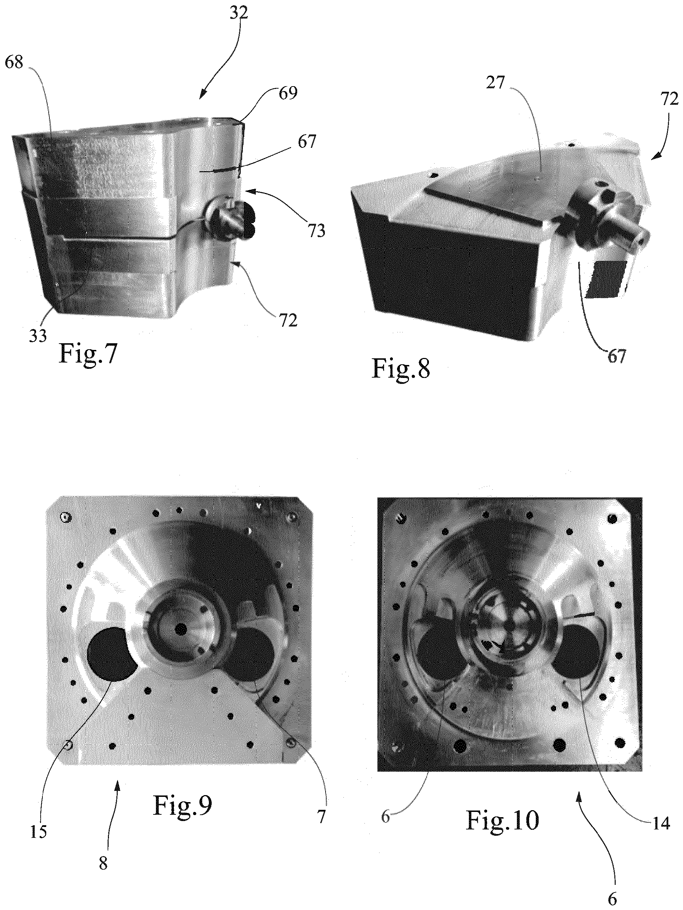

- La figure 7 est une vue du sabot de la turbine selon le mode de réalisation des figures précédentes avec insertion d'une pale dans la fente ;
- La figure 8 est une vue partielle du sabot (partie supérieure de sabot omis) avec une pale en position d'insertion;
- La figure 9 est une vue de flasque inférieur de la turbine ;
- La figure 10 est une vue de flasque supérieur de la turbine ;

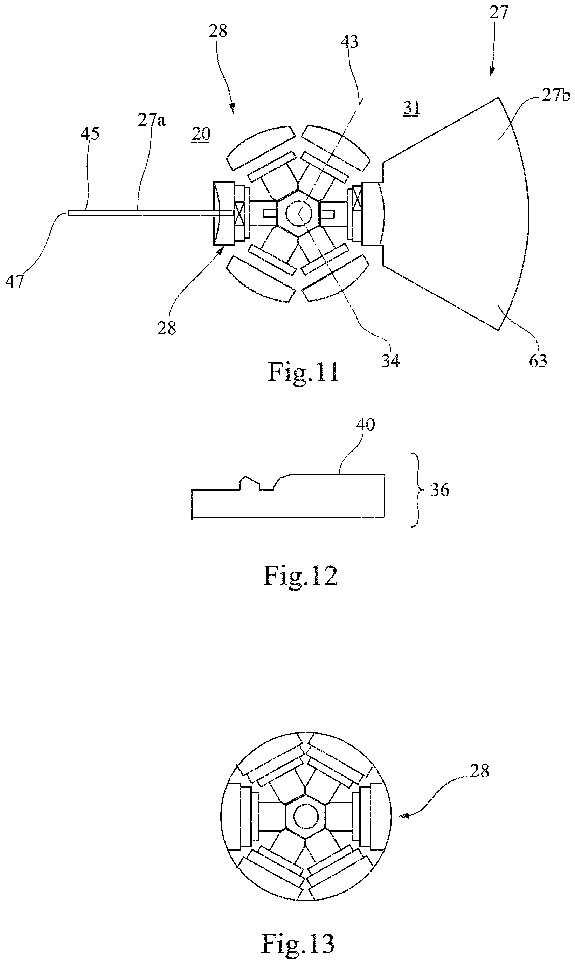

- La figure 11 est une vue en plan du rotor de la turbine ;
- La figure 12 est une vue de profil de la couronne inférieure du stator de la turbine ;
- La figure 13 est une vue en plan du cylindre de support de pale du rotor ;

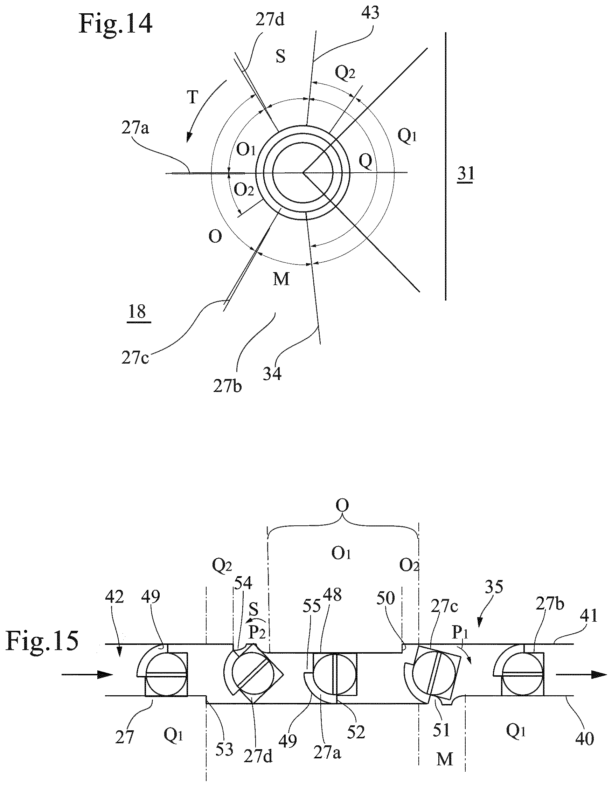

- La figure 14 est une représentation des phases de positions des pales du rotor de la turbine selon le premier mode de réalisation ;
- La figure 15 est une représentation schématique de moyens d'actionnement des pales de la turbine selon le premier mode de réalisation ;

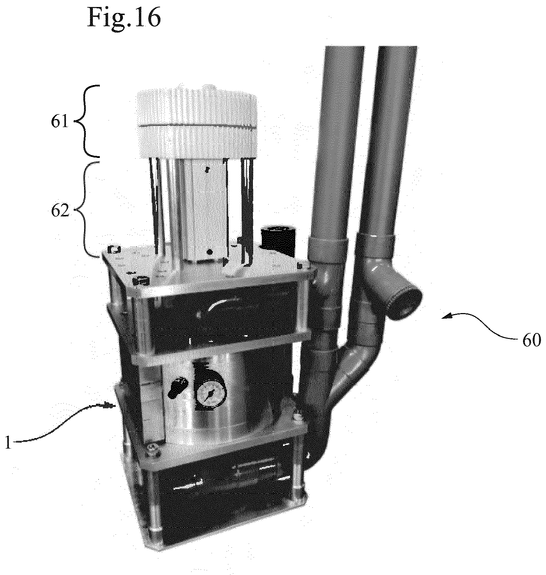

- La figure 16 est une vue en perspective d'un groupe de production électrique comprenant une turbine selon le premier mode de réalisation ;

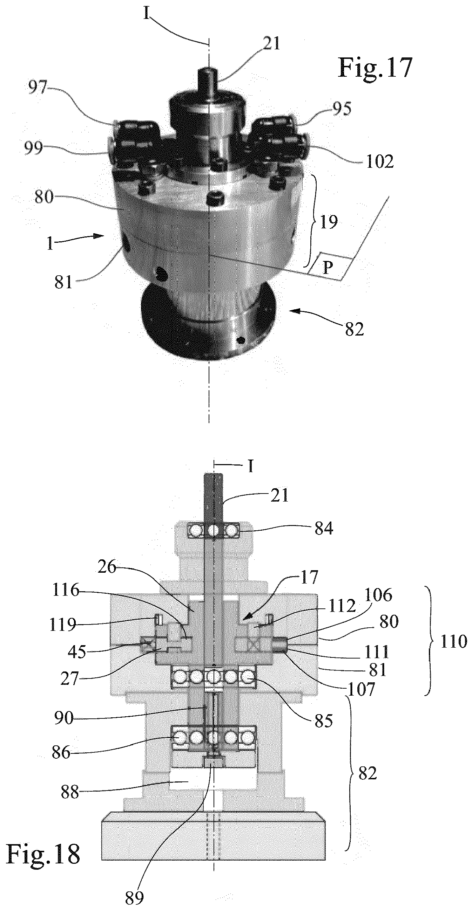

- La figure 17 est une vue générale en perspective d'une turbine à deux chambres selon un second mode de réalisation de l'invention ;
- La figure 18 est une vue en coupe transversale d'une turbine selon le second mode de réalisation ;

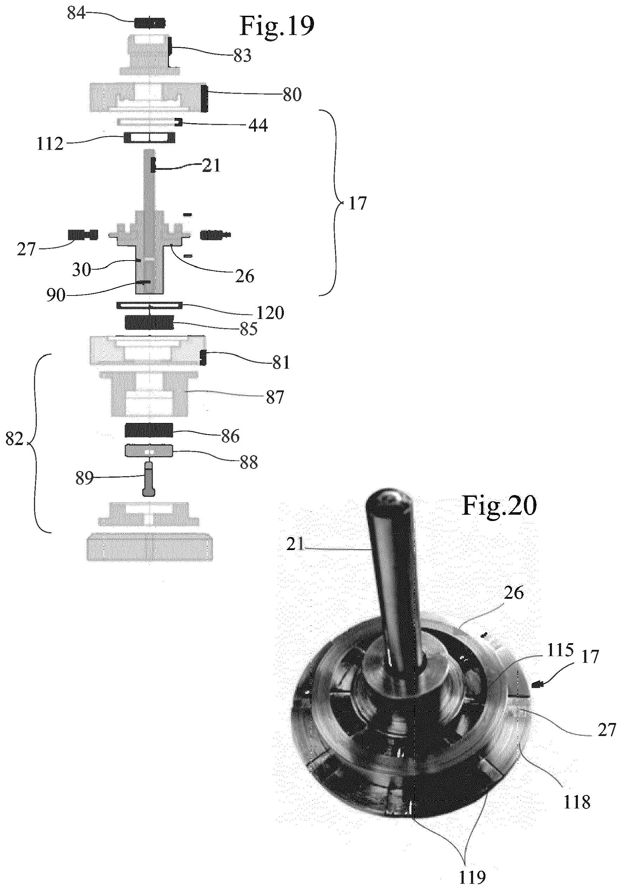

- La figure 19 est une vue éclatée en coupe de la turbine de la figure 17;
- La figure 20 est une vue partielle sans le flasque supérieur de la turbine selon le second mode de réalisation ;

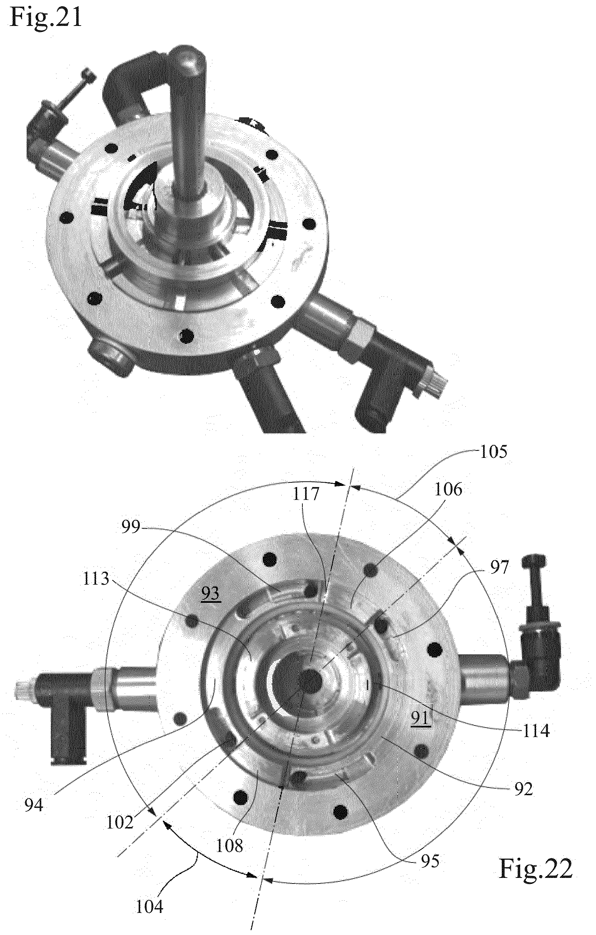

- La figure 21 est une vue du rotor de la turbine selon le second mode de réalisation ;
- La figure 22 est une vue en plan du flasque inférieur du stator de la turbine selon le second mode de réalisation ;

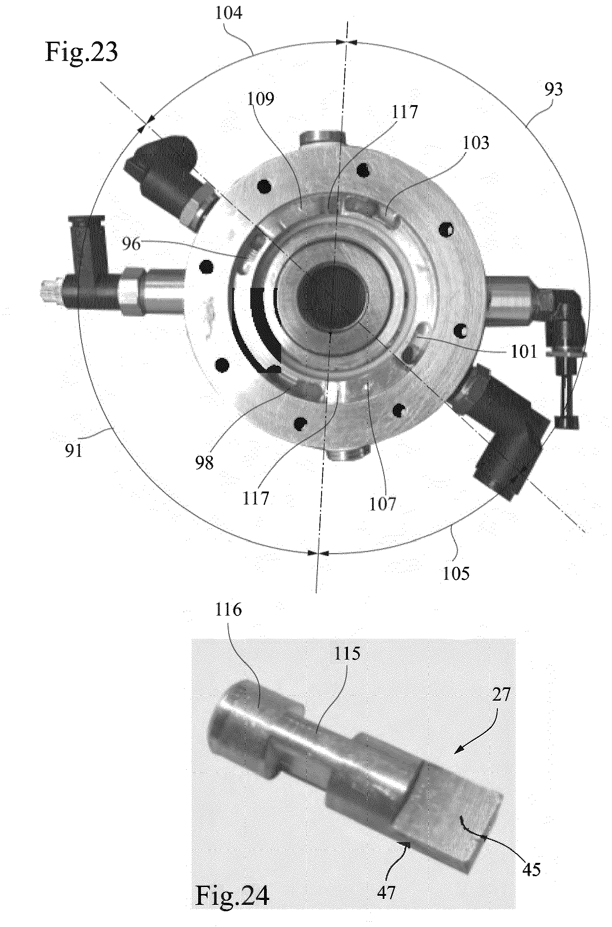

- La figure 23 est une vue en plan du flasque supérieur du stator de la turbine selon le second mode de réalisation ;
- La figure 24 est une vue d'une pale individuelle de la turbine selon le second mode de réalisation ;

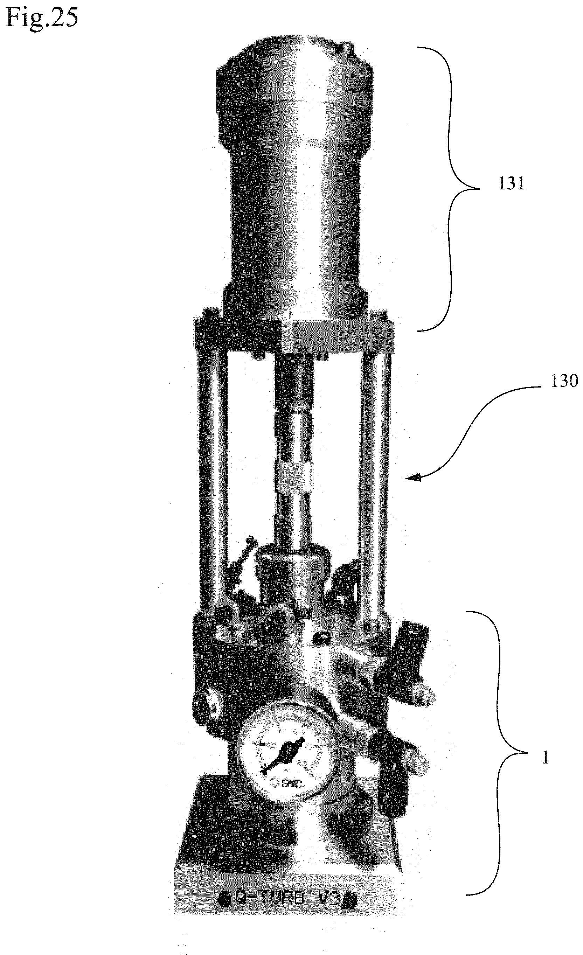

- La figure 25 est une vue en perspective d'un groupe de production électrique comprenant une turbine selon le second mode de réalisation.

Pour plus de clarté, les éléments identiques seront repérés par des signes de référence identiques sur l'ensemble des figures.

### DESCRIPTION DÉTAILLÉE DE MODES DE RÉALISATION

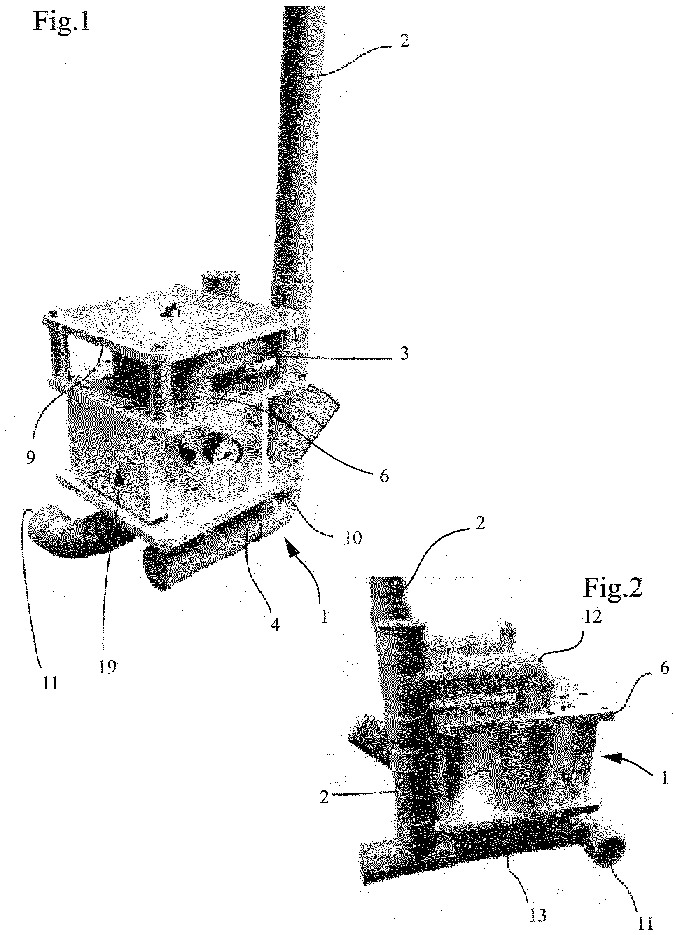

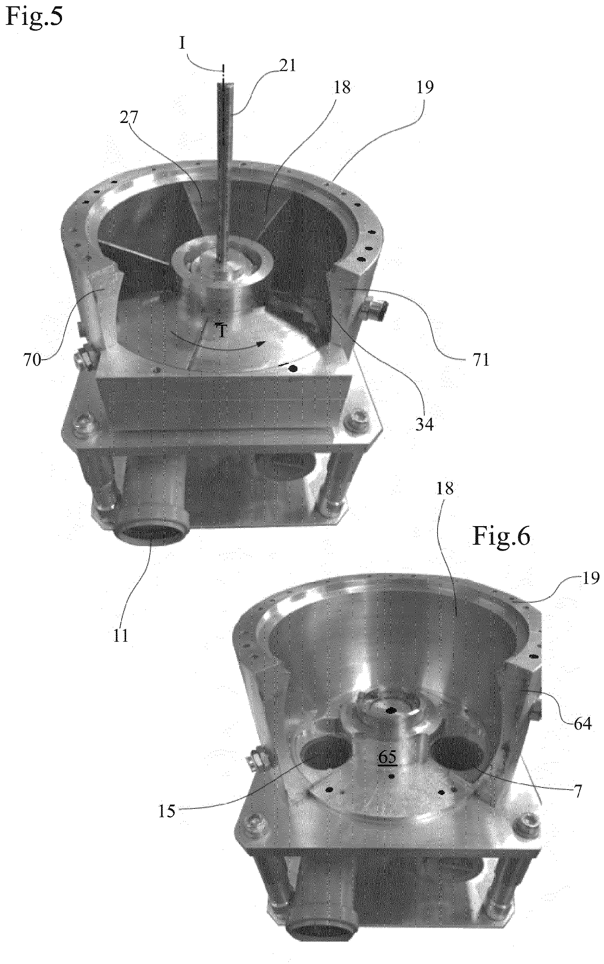

Un premier mode de réalisation de la turbine selon l'invention est illustré en relation avec les figures 1 à 16. Dans ce premier mode, la turbine est conçue pour transformer l'énergie hydraulique en énergie mécanique par entraînement du rotor de la turbine par la force hydraulique créée par une hauteur de liquide.

Dans l'exemple de l'invention, la turbine pour liquide 1 est reliée à une chute d'eau ou conduite 2 qui peut être de hauteur variable, par exemple comprise entre 0.5 et 100 m. La conduite 2 comprend deux branches d'admission respectivement supérieure 3 et inférieure 4 pour alimenter la turbine 1 en liquide. La branche d'admission supérieure 3 alimente une admission supérieure 5 d'un flasque supérieur 6. La branche d'admission inférieure 4 alimente une admission inférieure 7 d'un flasque inférieur 8. Les flasques 6, 8 peuvent être maintenus par un châssis respectivement supérieur 9 et inférieur 10. La turbine 1 est aussi reliée à une conduite de sortie liquide 11 pour évacuer le liquide sortant de la turbine 1 depuis deux branches de refoulement respectivement supérieure 12 et inférieure 13. La branche de refoulement supérieure 12 évacue le liquide d'un refoulement supérieur 14 (figure 10). Le liquide dans la turbine est ainsi alimenté et évacué selon plusieurs faces de la turbine ; ce qui permet une meilleure répartition de liquide dans la turbine et un meilleur équilibrage des pressions. Il va de soi que le liquide dans la turbine peut être alimenté ou refoulé, alternativement ou cumulativement, sur un côté latéral par exemple. De même, un arrangement de turbine avec une seule admission et un seul refoulement sur le flasque inférieur ou supérieur peut être prévu.

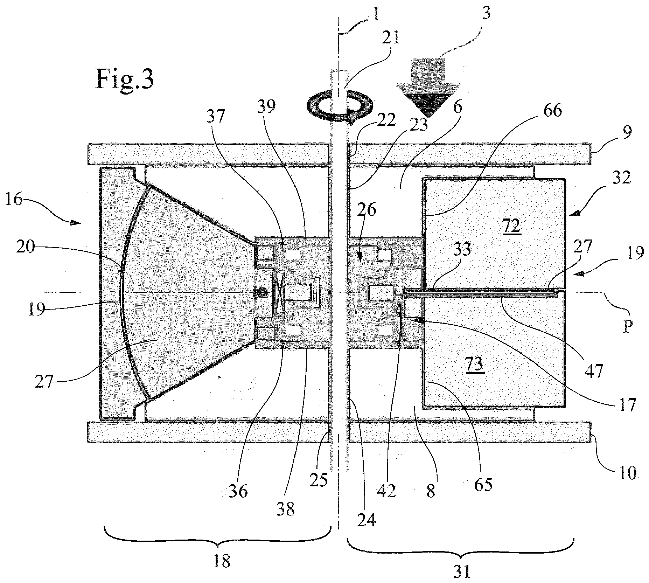

Les figures 3 à 5 montrent la turbine 1 avec un stator 16 et un rotor interne 17. Le stator comprend une portion de stator circonférentielle de poussée 18 délimitée en partie par un corps de stator 19 et par les flasques supérieur 6 et inférieur 8. La portion circonférentielle de poussée définit une chambre 20 qui s'étend dans un plan circonférentiel médian P, de préférence un plan de symétrie pour les flasques. Les admissions 5, 7 ainsi que les refoulements 14, 15 des flasques communiquent ainsi avec la chambre 20 pour respectivement l'alimentation et l'évacuation du liquide.

Le rotor 17 comprend un arbre de rotation 21 guidé en rotation selon un axe I par des alésages 22, 23, 24, 25 traversant les flasques et châssis du stator. L'axe I est perpendiculaire au plan médian P. L'arbre 21 est solidaire d'un cylindre central de support 26 au travers d'un alésage axial central 30. L'arbre est fixé avec le cylindre de sorte que ces deux éléments tournent de concert selon l'axe de rotation I. Le cylindre est conçu pour recevoir une pluralité de pales 27 montées de manière pivotante sur le cylindre 26. Chaque pale 27 est montée sur le cylindre central de support 26 par une base cylindrique 28 dont une extrémité au moins est engagée dans un palier radial 29. Les pales sont distribuées de manière préférentiellement équilibrée sur le pourtour de l'arbre en prévoyant une série d'alésages radiaux équidistants.

Les pales sont donc arrangées pour se déplacer en révolution autour de l'axe I dans la chambre de compression 20 de la portion circonférentielle de poussée 18 selon une trajectoire de révolution circonférentielle T dirigée dans le sens depuis les admissions vers les refoulements.

Comme le montrent plus particulièrement les figures 3, 4, 7 et 8, le stator comprend en plus une portion de stator circonférentielle d'insertion 31 s'étendant dans la direction de révolution T comprenant de préférence un bloc de stator 32 comprenant une fente 33 arrangée pour recevoir les pales 27 dans une position d'insertion à l'extrémité aval 34 de la chambre de compression. La fente traverse de part en part le bloc et s'étend jusqu'à l'extrémité amont 43 de la chambre de compression 20. Pour cela permettre leur insertion lors de la rotation du rotor, les pales sont pivotées dans le plan circonférentiel médian P depuis leur position transversale de poussée dans la chambre de compression.

Le bloc 32 peut être formé d'un sabot amovible lequel s'agence au travers d'une échancrure radiale 64 formés dans le corps du stator 19. Le sabot est ainsi dimensionné circonférentiellement pour couvrir le secteur angulaire de l'échancrure dans laquelle il s'agence de manière étanche. Les parois latérales 68, 69 du sabot s'applique de manière étanche contre les bords latéraux 70, 71 de l'échancrure du corps du stator. Le sabot est aussi dimensionné radialement avec une surface arquée frontale 67 pour s'appliquer de manière étanche contre un bord de forme complémentaire arqué 65 du flasque inférieur et contre un bord de forme complémentaire arqué 66 du flasque supérieur. Le sabot peut être formé de deux demi parties de sabot 72, 73 lesquelles s'assemblent ensemble pour définir la fente du sabot.

La figure 11 montre ainsi un rotor avec deux pales opposées ; une première pale 27a en position transversale dans la chambre 20 de la portion circonférentielle de poussée et une pale 27b en position d'insertion dans la portion circonférentielle d'insertion 31 du stator.

Le passage de la position transversale de poussée dans la chambre à la position d'insertion des pales se fait en forçant le pivotement de la pale autour de son axe radial par des moyens d'actionnement 35 représentés en particulier aux figures 3, 4, 11, 12, 14 et 15 et qui seront décrits en détail plus loin.

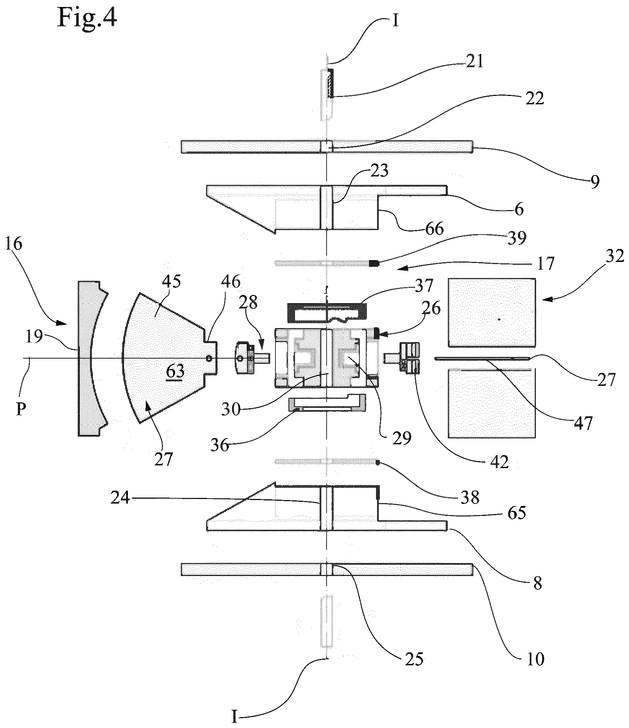

Comme le montre la figure 4, la pale 27 comprend un corps 63 et une partie de rattachement 46 connectée à la base 28 de la pale. Le corps de la pale comprend une surface active de poussée 45 représentant la plus grande surface du corps de la pale et une section maximale d'épaisseur 47. La section maximale d'épaisseur est arrangée pour s'ajuster en glissement, avec un minimum de jeu, dans la fente 33 du bloc 32 de la portion circonférentielle d'insertion du stator.

Les figures 14 et 15 montrent le principe du mouvement relatif des pales au court de leur trajet à chaque révolution en fonction de leur position angulaire vis-à-vis du stator, en particulier des portions circonférentielles, respectivement de poussée 18 et d'insertion 31. La figure 14 montre les différents secteurs angulaires alors que la figure 15 illustre plus précisément le principe de fonctionnement des moyens d'actionnement 35.

Comme le montre les figures 4 et 15, les moyens d'actionnement 35 sont préférablement des moyens d'actionnement à came. Ainsi, selon l'exemple illustré, le stator comprend une couronne annulaire inférieure 36 et une couronne annulaire supérieure 37 ; lesquelles sont placées de part et d'autre du cylindre 26 du rotor. Chaque couronne peut reposer sur une table de rotor, respectivement inférieure 38 et supérieure 39. Chaque table de rotor vient en appui sur un flasque correspondant et chaque couronne vient en appui sur une table de rotor.

Les couronnes annulaires 36, 37 ont chacune un chemin de came, respectivement inférieur 40, et supérieur 41, configurés pour s'engager contre un suiveur de came 42 de la base de chaque pale lors de la révolution de la pale dans la trajectoire circonférentielle T. Les deux chemins de came 40, 41 coopèrent ensemble pour déplacer le suiveur de came selon un mouvement de va-et-vient d'un quart de tour illustré à la figure 15. Dans chaque position extrême de ce mouvement, la pale se trouve bloquée en position. Dans l'une de ces positions, la pale est bloquée en position transversale de poussée, et dans l'autre, elle est bloquée en position d'insertion. Les chemins de came 40, 41 sont aussi agencés pour faire pivoter les pales dans un premier sens dès le passage de l'extrémité amont 43 de la chambre, et dans le sens opposé, juste avant l'arrivée de la pale à l'extrémité aval 34 de la chambre.

La pale 27a qui est placée dans la chambre de compression est en position transversale dite « position de poussée » dans un secteur angulaire O donné. Ce secteur peut comprendre un sous-secteur 01 dans lequel la pale est bloquée par les chemins de came. Dans ce sous-secteur 01, les chemins de came 40, 41 des couronnes sont sensiblement rectilignes et parallèles. Le suiveur de came 42 possède une première portion rectiligne 48 qui repose sur la portion rectiligne du chemin de came de la couronne supérieure. Une portion arrondie 49 du suiveur de came est en contact avec la portion rectiligne du chemin de came 41 de la couronne inférieure. Ainsi, la pale 27a est bloquée en position de poussée transversale et peut donc subir la pression hydraulique sans pivoter pour l'entraînement du rotor (figure 15).

Dans le secteur 01, la pale occupe toute la section transversale de la chambre de manière à être poussée en révolution sur sa trajectoire T par le liquide sans fuite significative entre la pale et la surface de la chambre de compression. Comme le montre la figure 14, de préférence au moins deux pales 27a, 27c consécutives sont ainsi placées et bloquées dans cette position dans la chambre entre les admissions 5, 7 et les refoulements 14, 15. Le secteur angulaire 01 dans lequel les pales sont en position bloquée en position transversale de poussée peut être de l'ordre de 95° à 120°.

Le sous-secteur 01 peut être suivi d'un sous-secteur 02 dans lequel la pale est libre dans la chambre. La pale peut être libérée par un dégagement ou une marche en retrait 50 du chemin de came de la couronne supérieure alors que le chemin de came de la couronne inférieure reste rectiligne. Ce dégagement dans le secteur 02 permet à la pale d'engager sa rotation par l'effet de la pression du fluide et évite ainsi les blocages. Ce secteur 02 est toutefois optionnel.

Alors que la pale est encore dans la chambre de compression 20 mais en approche de la fente, un secteur M de pivotement de la pale est prévu par les chemins de came 40, 41 lesquels s'engagent avec le suiveur de came pour forcer le pivotement de la pale d'un quart de tour dans un premier sens P1. La pale 27c prend alors la position alignée de la pale 27b dans le plan circonférentiel médian P. Ce secteur M jouxte l'entrée 34 du bloc 32 et de la fente 33. Ce secteur angulaire M est plus court que le secteur O, par exemple, de l'ordre de 30-50°, par exemple 36°. Le pivotement peut être obtenu par une dent 51 du chemin de came de la couronne inférieure qui s'engage dans un creux 52 du suiveur de came.

Une fois la pale 27b orientée dans la direction de la fente, elle continue sa trajectoire en révolution dans la fente dans le secteur angulaire Q du bloc jusqu'à son désengagement complet du bloc au point 43 en avant de l'entrée de la chambre. Les chemins de came 40, 41 peuvent être rectilignes dans un sous-secteur Q1 correspondant à la longueur angulaire de la fente de manière à bloquer la pale en position d'insertion. Toutefois, une position bloquée des pales dans la fente est optionnelle.

Le secteur angulaire Q correspond à la position de la pale en position d'insertion et se finit par un sous-secteur Q2 dans lequel la pale est libérée par un dégagement ou une marche en retrait 53 du chemin de came de la couronne inférieure.

Ensuite, dans le secteur final S, la pale est pivotée dans le sens opposé P2 d'un quart de tour par les moyens d'actionnement pour placer la pale 27d dans la position transversale de poussée. Ce secteur est le plus court possible, par exemple de l'ordre de 30 à 50°, par exemple 36°. Ce pivotement peut être obtenu par une dent 54 du chemin de came 41 de la couronne supérieure qui s'engage dans un second creux 55 du suiveur de came de la pale. Les deux creux 52, 54 sont ainsi disposés à 90° sur le suiveur de came de la pale.

Bien entendu les moyens d'actionnement ainsi conçus peuvent prendre de nombreuses autres variantes.

Comme le montre la figure 16, la turbine 1 peut faire partie d'un groupe de production électrique 60 comprenant un générateur électrique 61 et un groupe multiplicateur 62 permettant de multiplier la vitesse de rotation de la turbine. Dans le cas d'une turbine basse pression/grand débit, des essais ont permis de démontrer qu'un groupe utilisant un générateur standard, exploitant une chute de 14 cm de hauteur utile (la hauteur nécessaire pour l'énergie de fonctionnement à vide avec le nombre de t/s donné est déduite, le solde de hauteur de chute correspond à l'énergie utile) pour un débit de 1,1 l/s et une vitesse de rotation de 0,45 t/s permet d'obtenir une puissance de 5W, soit environ 3 fois plus qu'une installation conventionnelle. Par ailleurs, pour le cas d'une turbine Pelton, d'autres tests en pression élevée/faible débit ont démontré une amélioration du rendement de l'ordre de 50 à 100%.

Un second mode de réalisation de la turbine selon l'invention est illustré en relation avec les figures 17 à 25.

D'une manière générale, la turbine second ce second mode est plus spécialement conçue pour une utilisation haute pression et se caractérise par une vitesse de rotation du rotor élevée et un faible dimensionnement des pales. L'utilisation nécessite un équilibrage de toutes les forces perpendiculaires à la rotation des pales contre le rotor (freinage, coincement). Cet équilibrage peut être résolu par l'arrangement symétrique de deux chambres de compression dans le stator assurant le flottage du rotor.

Les figures 17 à 19 montrent la turbine 1 avec un corps 19 de stator formé de deux parties ou flasques 80, 81 assemblées selon un plan d'assemblage correspondant au plan circonférentiel médian P. Le corps peut reposer sur une embase 82 laquelle peut être fixée sur un support ou panneau externe. Le corps emprisonne un rotor 17 lequel comprend un arbre central de rotation 21 qui s'étend dans l'axe de rotation I. L'arbre est connecté à un cylindre de support de pale 26. Une pluralité de pales 27 sont montées radialement sur le cylindre 26. Une douille de guidage 83, montée sur le flasque supérieur 80, munie d'un roulement 84 peut être montée sur le flasque supérieur pour un guidage supérieur de l'arbre. Le cylindre 26 du rotor peut aussi être monté par un ou plusieurs roulements. Par exemple, un roulement 85 est positionné dans un logement du flasque inférieur 81 et prend appui sur un épaulement inférieur du cylindre. De plus, un élément 87 de l'embase 82 comprenant un logement interne peut recevoir un roulement 86 lequel est appliqué dans le logement par une bague 88 au moyen d'une vis 89 vissée sur une douille taraudée 90 logée dans l'alésage central 30 du cylindre. Il est entendu que d'autres modes de montage pour le guidage en rotation du rotor dans le stator sont possibles.

Comme il apparait sur les figures 22 et 23, le stator comprend une première portion circonférentielle de poussée 91 dans laquelle s'étend une première chambre de compression 92 et comprend une seconde portion circonférentielle de poussée 93 dans laquelle s'étend une seconde chambre de compression 94. Ces chambres sont opposées par rapport à l'axe I et de préférence symétriques. Du fait de la séparation en deux flasques séparables, les chambres sont délimitées par l'assemblage de ces deux flasques selon la plan P.

Chaque chambre comprend deux admissions et deux refoulements. Plus précisément, la première chambre 92 comprend une admission supérieure 95 et une admission inférieure 96 ainsi qu'un refoulement supérieur 97 et un refoulement inférieur 98. De même la seconde chambre 94 possède une admission supérieure 99 et une admission inférieure 101 ainsi qu'un refoulement supérieur 102 et un refoulement inférieur 103.

Les admissions d'une même chambre sont positionnées de manière opposée vis-à-vis du plan P. De même les refoulements sont positionnés de manière opposée vis-à-vis du plan P. Les admissions ainsi que les refoulements des deux chambres sont aussi opposées vis-à-vis de l'axe I.

Ainsi, on obtient un équilibrage des forces dans les deux chambres qui favorise le flottage du rotor et optimise le rendement de la turbine.

Les deux chambres 92, 94 sont séparées par deux portions circonférentielles d'insertion 104, 105 du stator. Chaque portion est formée par un bloc ou sabot 110 séparées sur chaque flasque en deux parties 106-107 ; 108-109 en vis-à-vis et de part et d'autre du plan P. Les parties du sabot sont configurées pour délimiter une fente 111 permettant l'insertion de la pale selon une position d'insertion comme dans le mode précédent (figure 18).

Comme le montre la figure 24 selon un exemple de pale 27, la pale comprend une surface active de poussée 45 et une section maximale d'épaisseur 47. Les pales 27 pivotent et s'orientent ainsi avec leur surface active transversale au plan P lorsqu'elles se déplacent dans les chambres 92, 94. Elles s'insèrent en position d'insertion dans la fente de chaque sabot après orientation en position alignée ou couchée dans le plan P pour permettre le passage de la section maximale d'épaisseur 47.

La pale possède aussi une base cylindrique de pivot 116 engagée dans un logement radial du cylindre.

L'actionnement des pales est commandé par des moyens d'actionnement de type à came. Ces moyens peuvent comprendre une partie de came selon une couronne annulaire 112 disposée par exemple dans le flasque supérieur autour de l'axe central (voir figure 19). La couronne possède deux chemins de came successifs et opposés 113, 114 qui agissent sur un suiveur de came 115 de la pale. Le suiveur de came 115 peut être par exemple une portion aplanie orientée perpendiculairement à la surface active 45 de la pale. Ainsi, les chemins de came agissent sur le suiveur de came 115 dans une seule direction du mouvement de pivotement, comme par exemple pour forcer la pale à pivoter de sa position transversale de poussée à sa position couchée. Le second mouvement de pivotement, par exemple celui qui consiste à forcer la pale de la position couchée à la position transversale de poussée peut être forcé par une ou plusieurs pentes 117 à l'entrée des sabots. Cette pente forme ainsi la deuxième partie des moyens d'actionnement. Bien entendu, il serait possible de disposer sur la couronne deux fois deux chemins de came pour agir sur le pivotement de la pale à la fois de la position de poussée à la position couchée et à la fois de la position couchée à la position de poussée.

Comme le montre le rotor de la figure 20, le cylindre central 26 peut comprendre des ailes radiales fixes 118 située entre chaque pale successive. Ces ailes ont préférablement une section d'épaisseur maximale 119 sensiblement ajustée en glissement étanche à la section de la fente 111 des sabots de la portion circonférentielle d'insertion. Les ailes fixes couvrent un secteur angulaire compris entre 1 et 5 fois le secteur angulaire couvert par la pale en position couchée. Dans cet exemple, le rotor comprend n= 8 pales et p= 8 ailes fixes mais *n* et p peuvent varier entre 4 et 20, de préférence entre 6 et 12.

Il est à noter que le montage de la turbine peut comprendre plusieurs joints d'étanchéité. Par exemple, un joint torique 44 peut être présent entre le flasque supérieur 80 et le rotor 17 et un second joint torique 120 peut être présent entre le flasque inférieur 81 et le rotor.

Selon un exemple pratique du second mode de réalisation, les caractéristiques générales suivantes peuvent ainsi être obtenues.

Pour 4 bar de pression et un débit de 0.2 litre/seconde : Couple total obtenu : 3,85 kg/cm, Vitesse de rotation totale : 33,12 t/s. La vitesse de rotation idéale est d'environ 7 t/seconde.

Comme le montre la figure 25, la turbine selon le second mode peut faire partie d'un groupe de production électrique 130 comprenant un générateur électrique 131. Un groupe multiplicateur de vitesse est optionnel.

Bien entendu la présente invention peut faire l'objet de nombreuses variantes qui sont à la portée de l'homme du métier.

## Revendications

1. Turbine (1) pour liquide comprenant un stator (16) et un rotor (17) monté en rotation autour d'un axe de rotation I dans le stator ; ledit stator comprenant :
- au moins une portion circonférentielle de poussée (18 ; 91, 93) dans laquelle s'étend une chambre de compression (20 ; 92, 94) dans le stator selon un plan circonférentiel P ;
- au moins une admission (6, 7 ; 95, 96, 99, 101) communiquant avec la chambre pour l'entrée du liquide dans la chambre ;
- au moins un refoulement (14, 15 ; 97, 98, 102, 103) communicant avec la chambre pour la sortie du liquide hors de la chambre de compression ;
- des moyens de guidage du rotor (22-25 ; 83, 84, 85, 86) en rotation selon un axe de rotation I ;
- une pluralité de pales (27) configurées pour se déplacer dans ladite chambre en révolution selon une trajectoire T circonférentielle autour de l'axe de rotation I;
chaque pale ayant au moins une surface active de poussée (45) et au moins une section maximale en épaisseur (47) perpendiculaire à ladite surface active de poussée de plus petite surface que la surface active de poussée ;
**caractérisée en ce que** le stator comprend au moins une portion circonférentielle d'insertion (31 ; 104, 105) s'étendant dans la trajectoire circonférentielle T des pales dans laquelle s'étend une fente (33, 111) orientée dans le plan circonférentiel P ; de plus petite section que la section de ladite chambre et traversant ladite portion circonférentielle d'insertion ;
et **en ce que** lesdites pales (27) sont montées sur le rotor de manière pivotante, selon leur direction radiale R relative à l'axe de rotation I, pour pouvoir pivoter dans ladite chambre (20 ; 92, 94) entre une position de poussée, dans laquelle la pale (27) est transversale au plan circonférentiel P entre l'admission et l'échappement, et une position d'insertion, alignée ou parallèle par rapport au plan circonférentiel P, pour permettre le passage de la section maximale en épaisseur (47) des pales dans ladite fente (33, 111) de la portion circonférentielle d'insertion (31 ; 104, 105) à chaque révolution des pales autour de l'axe de rotation I ;
et **en ce que** la turbine comprend des moyens d'actionnement (35) pour commander le mouvement de pivotement des pales entre la position de poussée et la position d'insertion en fonction de la position circonférentielle de chaque pale relativement aux portions circonférentielles de poussée et d'insertion.

2. Turbine selon la revendication 1, **caractérisée en ce que** la surface active de poussée (45) de chaque pale (27) est dimensionnée de façon à sensiblement sceller la section transversale de la chambre (20 ; 92, 94) lors du déplacement de chaque pale en position de poussée dans la chambre.

3. Turbine selon la revendication 1 ou 2, **caractérisée en ce que** les pales sont montées sur un cylindre central rotatif (26) et/ou arbre de rotation (21) de sorte qu'au moins deux pales (27a, 27c) consécutives sont simultanément en position de poussée dans la chambre (20 ; 92, 94).

4. Turbine selon l'une quelconque des revendications 1 à 3, **caractérisée en ce que** la section de la fente (33, 111) de ladite au moins une portion d'insertion (31 ; 104, 105) est ajustée à la section maximale en épaisseur (47) de chaque pale pour permettre le déplacement en glissement de la pale de manière essentiellement étanche au liquide.

5. Turbine selon l'une quelconque des revendications 1 à 4, **caractérisée en ce que** l'admission ou les admissions (5, 7 ; 95, 96, 99, 101) et le refoulement ou les refoulements (14, 15 ; 97, 98, 102, 103) sont disposés à proximité respectivement des proximités amont (43) et aval (34) de la chambre.

6. Turbine selon l'une quelconque des revendications précédentes, **caractérisée en ce que** le rotor (17) comprend au moins un cylindre central de support (26) comprenant un alésage central (30) pour le montage de l'arbre de rotation (21) du rotor et une pluralité de paliers radiaux (29) ; chacun d'eux étant configuré pour la connexion en pivot de la base (28) d'une pale (27).

7. Turbine selon la revendication 6, **caractérisée en ce que** le cylindre central (26) se prolonge entre les pales pivotantes (27) par des ailes radiales fixes (118); les ailes ayant une section d'épaisseur maximale (119) sensiblement ajustée en glissement étanche à la section de la fente (111) de la portion circonférentielle d'insertion ou des portions circonférentielle d'insertion.

8. Turbine selon la revendication 6 ou 7, **caractérisée en ce que** les moyens d'actionnement (35) comprennent des moyens d'actionnement à came configurés complémentairement sur le stator (16) et sur chaque pale (27) ou associée à chacune d'elles, tels que respectivement au moins un chemin de came (40, 41) et un suiveur de came (42); de manière à faire pivoter, au moins une fois à chaque révolution, chaque pale individuellement de leur position de poussée dans la chambre à leur position d'insertion dans la fente (33, 111), puis en retour, de leur position d'insertion dans la fente à leur position de poussée dans la chambre.

9. Turbine selon la revendication 8, **caractérisée en ce que** le stator comprend au moins une couronne annulaire (36, 37 ; 112) comprenant une partie des moyens d'actionnement à came, de préférence plusieurs de came (40, 41 ; 113, 114) configurés pour engager un suiveur de came localisé sur ou à proximité de la base (28) de chaque pale.

10. Turbine selon la revendication 9, **caractérisée en ce que** le stator comprend une couronne annulaire inférieure (36) et une couronne annulaire supérieure (37) lesquelles sont respectivement associées à un flasque inférieur (8) et un flasque supérieur (6) du stator ; chaque couronne annulaire comprenant au moins un chemin de came (40, 41) configuré pour engager un suiveur de came (42) de la pale (27) et faire pivoter la pale dans une des deux positions d'insertion ou de poussée, par exemple d'un quart de tour par position; les positions étant différentes pour chaque couronne.

11. Turbine selon l'une quelconque des revendications précédentes, **caractérisée en ce que** le stator (16) comprend un flasque supérieur (6) et un flasque inférieur (8) délimitant en partie ou au moins ladite chambre (20) ; et chaque flasque étant traversé par au moins une admission (5, 7) et un refoulement (14, 15) communiquant dans la chambre ; les admissions (5, 7) étant de préférence positionnés en vis-à-vis dans la direction parallèle à l'axe de rotation ou de chaque côté du plan circonférentiel P et/ou les refoulements (14, 15) étant de préférence positionnés en vis-à-vis dans la direction parallèle à l'axe de rotation I ou de chaque côté du plan circonférentiel P.

12. Turbine selon la revendication 10 ou 11, **caractérisée en ce que** le stator (16) comprend une échancrure radiale (64) pour l'insertion amovible d'un sabot (32) formant au moins une portion circonférentielle d'insertion (31) comprenant la fente.

13. Turbine selon la revendication 12, **caractérisé en ce que** le sabot (32) comprend une partie inférieure de sabot (73) et une partie supérieure (72) de sabot démontable et délimitant la fente (33).

14. Turbine selon l'une quelconque des revendications 1 à 9, **caractérisé en ce qu'**elle comprend une première portion circonférentielle de poussée (91) dans laquelle s'étend une première chambre (92) comprenant au moins une admission (95, 96,) et au moins un refoulement (97, 98) et une première portion d'insertion (104) comprenant une première fente (111) et comprend en plus une deuxième portion circonférentielle de poussée (93) dans laquelle s'étend une seconde chambre (94) comprenant au moins une autre admission (99, 101) et au moins un autre refoulement (102, 103) et une seconde portion d'insertion (105) ; les premières et secondes portions de poussée (91, 93) et les premières et secondes portions d'insertion (104, 105) étant opposées vis-à-vis de l'axe de rotation I.

15. Turbine selon la revendication 14, **caractérisé en ce que** le stator (16) comprend une partie de premiers moyens d'actionnement à came (113) associés à la première portion de poussée pour faire pivoter chaque pale individuellement de leur position de poussée dans la chambre à leur position d'insertion et inversement et une partie de seconds moyens d'actionnement à came (114) associés à la seconde portion de poussée pour faire pivoter chaque pale individuellement de leur position de poussée dans la chambre à leur position d'insertion et inversement ; les parties de premiers et second moyens d'actionnement à came (113, 114) étant opposées, de préférence symétriquement, vis-à-vis de l'axe de rotation I.

16. Turbine selon la revendication 15, **caractérisé en ce que** les premiers et second moyens d'actionnement à came sont portés sur au moins une couronne annulaire (112) comprenant deux chemins de came opposés (113, 114), de préférence symétriquement, configurés pour engager un suiveur de came (115) de chaque pale pour le pivotement de la pale (27) dans la direction d'insertion ou de poussée.

17. Groupe de production électrique (60, 130) par collecte d'énergie hydraulique comprenant au moins une turbine (1) selon l'une quelconque des revendications précédentes couplée à un générateur électrique (61, 131) et optionnellement un groupe multiplicateur (62) entre la turbine (1) et le générateur pour multiplier la vitesse de rotation transmise par l'arbre de la turbine au générateur électrique.
